# EUROPEAN PATENT SPECIFICATION

(11) **EP 2 707 529 B1**
(45) Date of publication and mention of the grant of the patent: **28.06.2017**
(21) Application number: 12721897.2
(22) Date of filing: 09.05.2012
(51) Int. Cl.: D04B 21/16

(54) **SPACER TEXTILE**
ABSTANDSTEXTIL
TRICOT DOUBLE PAROIS

(30) Priority: 10.05.2011 GB 201107749
(43) Date of publication of application: 19.03.2014
(73) Proprietor: Heathcoat Fabrics Limited, Devon EX16 5LL (GB)
(72) Inventor: KEITCH, George, Taunton Somerset TA3 7BN (GB)
(74) Representative: Marles, Alan David
(86) International application number: PCT/GB2012/051014
(87) International publication number: WO 2012/153131

(56) References cited:
- EP-A1- 0 424 215
- EP-A2- 0 529 671
- DE-A1- 3 139 402
- DE-U1- 20 003 097

## Description

The present invention relates to spacer textiles, and to methods of producing spacer textiles.

Spacer textiles typically comprise two separate, spaced apart fabric layers connected by relatively resilient monofilaments extending between the two fabric layers. The monofilaments interconnecting the two fabric layers provide a three dimensional quality to the textile (with the fabric layers being spaced apart) and also provide a degree of compressibility and resilience perpendicular to the surface of the textile. Spacer textiles are currently used as replacements for conventional foam materials such as polyurethane. Further advantages of spacer textiles are that they offer enhanced air and moisture permeability compared to foams which makes spacer textiles more desirable than foam materials in shoes, protective and other garments and other items worn close the body. Generally, spacer textiles are produced using polyester or nylon.

Spacer textiles are disclosed in, for example US-B-6,627,562 especially for use in ballistic protective garments and DE20003097 describes a multilayered knitted flame retardant textile with moisture conducting properties. Also, EP0424215 describes a three dimensional knitted fabric which is subsequently reinforced with a resin for use in construction; DE3139402 describes a heat exchanger element in the form of a multilayer knitted web which uses polyester or nylon as the pile threads connecting the upper and lower layers; and EP0529671 describes an upholstery knitted fabric with a compressive filling layer.

Unfortunately, spacer textiles have not found use in some areas where foam materials are currently used, in particular in the transport and in some protective clothing fields, where high temperature is a problem because polyester and/or nylon have relatively low melting points and so do not act as good thermal barriers. In these areas, heat resistant foam materials are still generally used.

It is an object of the present invention to provide a spacer textile which has uses in such fields and which overcomes the problems of the prior art.

The present invention accordingly provides a spacer textile comprising a first fabric layer, a second fabric layer and a plurality of filaments comprising poly ether ether ketone (PEEK) connecting the first and second fabric layers characterised in that the first fabric layer is a first knitted fabric layer, the second fabric layer is a second knitted fabric layer, and the plurality of filaments comprising poly ether ether ketone are monofilaments knitted with the first and second fabric layers.

Surprisingly, such a spacer textile has significantly enhanced heat resistance compared to known spacer textiles and so finds use in areas requiring thermal barrier properties where, previously, foam materials have not been replaced by spacer textiles. This has great advantages especially in, for example, the airline industry, because spacer textiles are typically much lighter than foam material with similar resilience. A further advantage of the spacer textile of the invention is that upon high heat the filaments do not produce toxic fumes.

Preferably, the first and/or the second fabric layer comprise aramid yarn. The preferred aramid yarn is a meta-aramid yarn (e.g. NOMEX™).

The spacer textile according to the invention may have first and second fabric layers of various forms depending upon the intended use. Consequently, the first and/or the second fabric layers may be independently selected from a relatively open structure (i.e. mesh) or a relatively closed structure. Closed structures are particularly useful in padding for upholstery where the upholstery textile needs to be relatively smooth. Mesh finds particular use where increased air flow is beneficial, for example in garments (such as shoes and protective clothing).

Preferably, the filaments (or monofilaments) each have a diameter in the range of 0.05 mm to 0,5 mm preferably 0.05 to 0.25 mm. This is advantageous because monofilaments in this range have been found, by the applicants, to provide sufficient resilience but not to be too stiff, in use.

Generally, the density of monofilaments will be in the range of 30 to 200 monofilaments per cm² (200 to 1200 monofilaments per square inch). This provides sufficient resilience to accomplish padding for various uses without the spacer textile being too stiff.

The monofilaments space the first fabric layer and the second fabric layer apart. Generally, the space between the first and second fabric layers is in the range of 1 mm to 20 mm. The particular spacing required depends on the use to which the spacer textile will be put.

Generally, spacer textile according to the present invention will be knitted.

Thus, in a second aspect the present invention provides a method of producing a spacer textile, the method comprising knitting a first fabric layer, a second fabric layer and a plurality of filaments (preferably monofilaments) comprising poly ether ether ketone connecting the first and second fabric layers.

The knitting method will generally comprise warp knitting, preferably Raschel warp knitting. Generally, the spacer textile according to the present invention will be made on a two needle bed Raschel machine.

The gauge of the knitting machine may be generally any suitable gauge and depends on the use to which the spacer textile is to be put. However, generally the gauge of the knitting machine will be 10 or higher (e,g. 10 to 22 gauge), preferably 12 or higher (e.g. 12 to 22 gauge).

Embodiments of the invention will now be described with reference to the accompanying drawings in which:
Figure 1 illustrates a mesh/PEEK/mesh textile according to a first embodiment of the present invention in (a) plan view and (b) cross-sectional view.
Figure 2 illustrates a mesh/PEEK/closed fabric textile according to a second embodiment of the present invention in (a) plan view on the mesh side (b) plan view on the closed fabric side and (c) cross-sectional view.
Figure 3 illustrates a closed fabric/PEEK/closed fabric textile according to a third embodiment of the present invention in (a) plan view, (b) cross-sectional view.

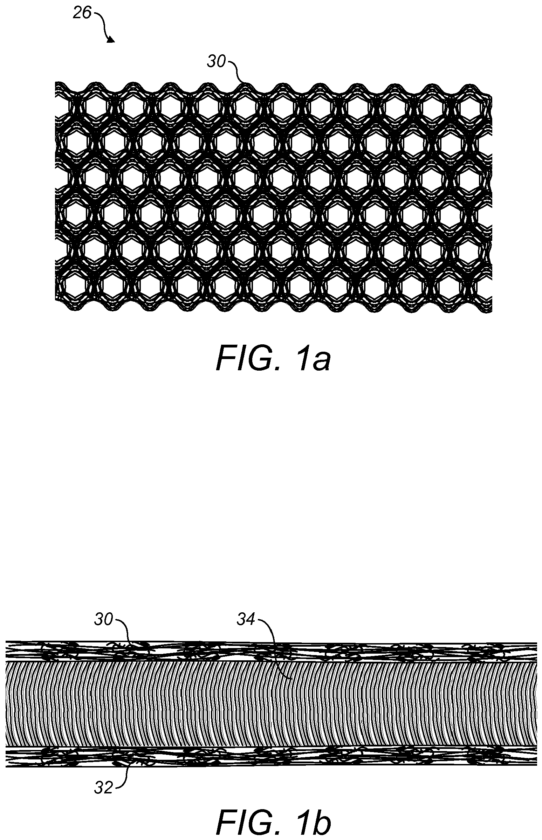

Figure 1(a) and 1(b) illustrate a sample of the mesh/mesh spacer textile of Example 1. The spacer textile. 26 comprises a relative open mesh first fabric layer 30 knitted of meta-aramid yarn (1/40 number metric, 240 dtex), connected by plurality of filaments 34 (0.1 mm diameter 100% PEEK, 108 dtex) of poly ether ether ketone (PEEK) to an open mesh second fabric layer 32 also knitted of the meta-aramid yarn. The spacer textile 26 is spaced apart and resilient perpendicular to the fabric layers 30, 32.

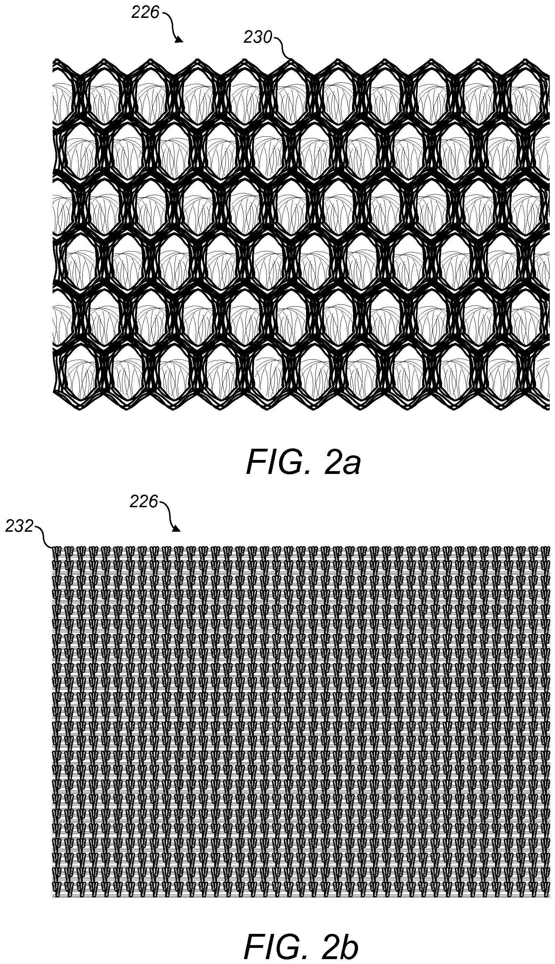

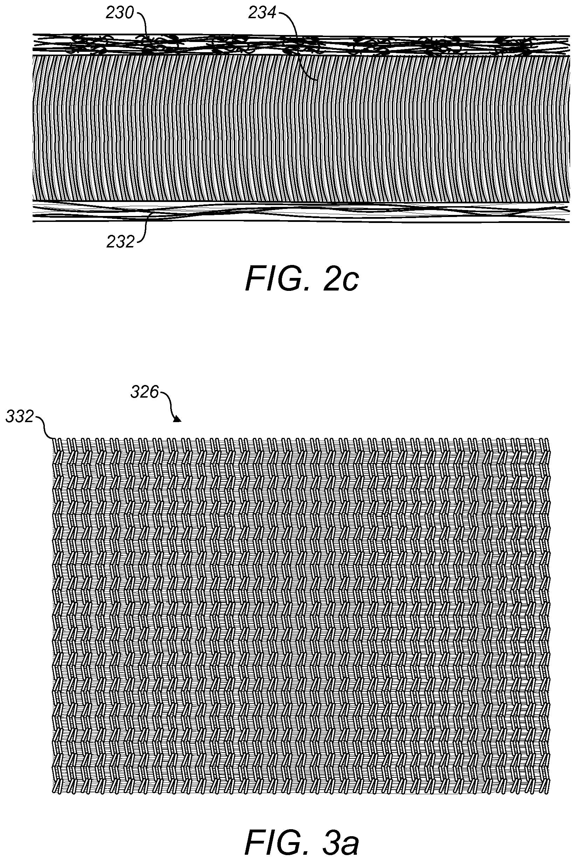

Figure 2(a), 2(b) and 2(c) illustrates a sample of a mesh/closed fabric spacer textile of Example 2. The spacer textile 226 comprises on one layer a relatively open mesh first fabric layer 230 knitted of meta-aramid yarn connected by a plurality of filaments 234 of PEEK to a closed fabric second fabric layer 232 also knitted of meta-aramid yarn.

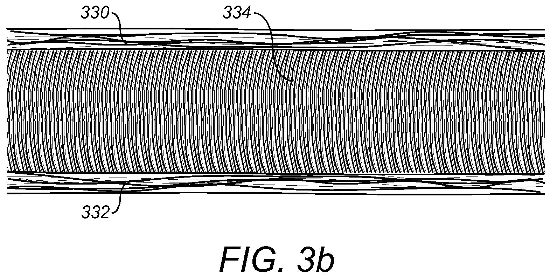

Figure 3(a) and 3(b) illustrates a sample of the closed fabric/closed fabric. spacer textile of Example 3. The spacer textile 326 comprises a closed structure first fabric layer 330 knitted of meta-aramid yarn connected by a plurality of filaments 334 of PEEK to a closed structure second fabric layer 332 also knitted of meta-aramid yarn.

The invention is further illustrated by the following examples in which spacer textiles were knitted on a seven guide bar Rachel knitting machine.

The invention relates to a spacer textile using poly ether ether ketone (PEEK) monofilaments. The spacer textile finds use as a resilient material with thermal barrier properties.

The embodiments of spacer textile are created by warp knitting technology. The structure of the textile is that two surface constructions (fabric layers) are held apart at a set distance by monofilament yarn. The whole construction is knitted together so the final textile is a complete structure.

In the examples, the spacer textile consists of two fabric layers knitted from meta-aramid (1/40 240 dtex) connected with monofilaments of poly ether ether ketone (PEEK) (100% PEEK, 0.1 mm diameter, 108 dtex). The construction allows for spacer textile to be produced in different thickness, weights and surface designs depending upon application requirements. The benefits of spacer textiles can in accordance with the invention be retained in relatively high temperature use.

Where the textile is exposed to high temperature no toxic fumes or gases (e,g. H₂S) are produced (which may be the case with other higher temperature yarns and can be a serious health issue).

The characteristics of the spacer textile allow varying levels of compression and recovery, airflow is also increased compared to foam materials.

### Example 1 mesh/mesh spacer textile

The notation for production of this textile is described in Table 1.

**Table 1**

| | |
|---|---|
| BAR 7 | 3-3 / 4-5 / 4-4 / 3-2 / 2-2 /1-0 /1-1 / 2-3 / 2-2 /1-0 /1-1 / 2-3 / 2-3 / 4-5 / 4-4 / 3-2 / / |
| BAR 6 | 2-2 / 1-0 /1-1 / 2-3 / 3-3 / 4-5 / 4-4 / 3-2 / 3-3 / 4-5 / 4-4 / 3-2 / 2-2 / 1-0 / 1-1 / 2-3 / / |
| BAR 5 | 2-3 / 1-0 / 2-3 / 4-5 / 3-2 / 4-5 / 3-2 / 4-5 / 3-2 / 4-5 / 3-2 / 1-0 / 2-3 / 1-0 / 2-3 / 1-0 / / |
| BAR 4 | 3-2 / 4-5 / 3-2 / 1-0 / 2-3 / 1-0 / 2-3 / 1-0 / 2-3 / 1-0 / 2-3 / 4-5 / 3-2 / 4-5 / 3-2 / 4-5 / / |
| BAR 3 | 4-5 / 4-4 / 3-2 / 2-2 / 1-0 / 1-1 / 2-3 / 2-2 /1-0 /1-1 / 2-3 / 3-3 / 4-5 / 4-4 / 3-2 / 3- 3 / / |
| BAR 2 | 1-0 / 1-1 / 2-3/ 3-3 / 4-5 / 4-4 / 3-2 / 3-3 / 4-5 / 4-4 / 3-2 / 2-2 /1-0 / 1-1 / 2-3 / 2-2/ / |
| BAR 1 | EMPTY |

| | |
|---|---|
| Notes: Bars 2 & 3 only knit on the front needle bed with threading of 2 threads in then 2 threads out. This creates the mesh in the front bed. Bars 4 & 5 knit firstly on the front bed and then move to the back bed, this will create the linker which separates the front and back of the mesh textile. By using the monofilament yarn as the linking thread this will keep the two mesh faces apart. The threading on bars 4 & 5 are 2 threads in then 2 threads out Bars 6 & 7 only knit on the back needle bed with threading of 2 threads in then 2 threads out. This will then create a mesh on the back bed. The hole size of the mesh for each layer is approximately 3 mm by 2 mm. | |

### Example 2 mesh/fabric (i.e. closed structure) spacer textile

The notation for production of this spacer textile is described in Table 2.

**Table 2**

| | |
|---|---|
| BAT 6 | 2-2 / 1-0 / 2-2 / 3-4 / 2-2 /1-0 / 2-2/ 3-4 / 2-2 / 1-0 / 2-2 / 3-4 / 2-2 / 1-0 / 2-2 / 3-41 / / |
| BAR 5 | 0-0 / 0-1 / 1-1 / 1-0 / 0-0 / 0-1 / 1-1 / 1-0 / 0-0 / 0-1 / 1-1 / 1-0 / 0-0 / 0-1 / 1-1 / 1-0 / / |
| BAR 4 | 2-3 / 4-5 / 3-2 / 1-0 / 2-3 / 4-5 / 3-2 / 1-0 / 2-3 / 4-5 / 3-2 / 1-0 / 2-3 / 4-5 / 3-2 / 1-0 / / |
| BAR 3 | 1-0 / 0-1 / 1-0 / 0-1 /1-0 / 0-1 / 1-0 / 0-1 / 1-0 / 0 -1 / 1-0 / 0-1 / 1-0 / 0-1 / 1-0 / 0-1 / / |
| BAR 2 | 3-2 / 1-1 / 1-0 / 1-1 / 2-3 / 1-1 / 1-0 /1-1 / 2-3 / 4-4 / 4-5 / 3-3 / 3-2 / 4-4 / 4-5 / 3-3 / / |
| BAR 1 | 2-3 / 4-4 / 4-5 / 4-4 / 3-2 / 4-4 / 4-5 / 4-4 / 3-2 / 1-1 / 1-0 / 2-2 / 2-3 / 1-1 / 1-0 / 2-2 / / |

| | |
|---|---|
| Notes: Bars 1 & 2 both have identical threading of 1 thread in 3 threads out which will create a large mesh. Knitting on every other needle across the bed. Bars 3 & 4 both have the identical threading of 1 thread in then 1 thread out. They knit on the front and back needle beds creating a spacer structure uging monofilament yarn. They knit on the same needles on the front needle bed as Bars 1 & 2. Bars 5 & 6 both have full set threading creating the fabric on the back needle bed. | |

### Example 3 fabric/fabric (i.e. closed structure/closed structure) spacer textile

The notation for production of this textile is described in Table 3.

**Table 3**

| | |
|---|---|
| BAR 6 | 2-2 / 1-0 / 2-2 / 3-4 / / |
| BAR 5 | 0-0 / 0-1 / 1-1 / 1-0 / / |
| BAR 4 | 4-5 / 3-2 / 1-0 / 2-3 / / |
| BAR 3 | 1-0 / 2-3 / 4-5 / 3-2 / / |
| BAR 2 | 1-0 / 0-0 / 0-1 / 1-1 / / |
| BAR 2 | 1-0 / 0-0 / 0-1 / 1-1 / / |
| BAR F 1 | 3-4 / 2-2 / 1-0 / 2-2 / / |

| | |
|---|---|
| Notes: Bars 1 & 2 both have full set threading (a thread in every guide). This will knit a textile on the first needle bed. Bars 3 & 4 both have full set threading using a Monofilament yarn and knitting on both needle beds. This will create a spacer. Bars 5 & 6 both have full set threading but only knitting on the back needle bed which will create the back of the fabric. | |

## Claims

1. A spacer textile (26, 226, 326) comprising a first fabric layer, a second fabric layer and a plurality of filaments comprising poly ether ether ketone connecting the first and second fabric layers **characterised in that** the first fabric layer is a first knitted fabric layer (30, 230, 330), the second fabric layer is a second knitted fabric layer (32, 232, 332), and the plurality of filaments comprising poly ether ether ketone are monofilaments (34, 234, 334) knitted with the first and second fabric layers (30, 230, 330; 32, 232, 332).

2. A spacer textile as claimed in claim 1, wherein the first and/or the second knitted fabric layer (30, 230, 330; 32, 232, 332) comprises aramid yarn.

3. A spacer textile as claimed in claim 2, wherein the aramid yarn is a meta-aramid yarn.

4. A spacer textile as claimed in any one of the preceding claims wherein the first and/or the second knitted fabric layer (30, 230, 330; 32, 232, 332) comprise a mesh or a closed structure fabric.

5. A spacer textile as claimed in any one of the preceding claims, wherein the monofilaments (34, 234, 334) each have a diameter in the range 0.05 mm to 0.5 mm.

6. A spacer textile as claimed in any one of the preceding claims wherein the density of monofilaments (34, 234, 334) in the textile is in the range 30 to 200 filaments per cm² (200 to 1200 filaments/in²).

7. A spacer textile as claimed in any one of the preceding claims, wherein the filaments (34, 234, 334) space apart the first knitted fabric layer (30, 230, 330) and second knitted fabric layer (32, 232, 332).

8. A spacer textile as claimed in claim 7, wherein the space between the first and second knitted fabric layers (30, 230, 330; 32, 232, 332) is in the range 1 mm to 20 mm.

9. A method of producing a spacer textile (26, 226, 326), the method comprising knitting a first fabric layer (30, 230, 330), a second fabric layer (32, 232, 332) and a plurality of monofilaments (34, 234, 334) comprising poly ether ether ketone connecting the first and second fabric layers (30, 230, 330; 32, 232, 332).

10. A method as claimed in claim 9, wherein knitting comprises warp knitting.

11. A method as claimed in either of claim 9 or claim 10, wherein the knitting comprises Raschel warp knitting.

12. A method as claimed in any one of claims 9 to 11, wherein the gauge of the knitting machine is 12 or higher.

13. A method as claimed in claim 12, wherein the gauge of the knitting machine is 12 to 22.

## Patentansprüche

1. Abstandstextil (26, 226, 326), umfassend eine erste Stofflage, eine zweite Stofflage und eine Vielzahl von Filamenten aus Polyetheretherketon, die die erste und die zweite Stofflage miteinander verbinden, **dadurch gekennzeichnet, dass** die erste Stofflage eine gestrickte Stofflage (30, 230, 330) ist, die zweite Stofflage eine zweite gestrickte Stofflage (32, 232, 332) ist und die Vielzahl von Filamenten aus Polyetheretherketon Monofilamente (34, 234, 334) sind, die mit der ersten und der zweiten Stofflage (30, 230, 330; 32, 232, 332) verstrickt sind.

2. Abstandstextil nach Anspruch 1, wobei die erste bzw. die zweite gestrickte Stofflage (30, 230, 330; 32, 232, 332) ein Aramidgarn aufweisen.

3. Abstandtextil nach Anspruch 2, wobei das Aramidgarn ein Meta-Aramidgarn ist.

4. Abstandstextil nach einem der vorhergehenden Ansprüche, wobei die erste bzw. die zweite gestrickte Stofflage (30, 230, 330; 32, 232, 332) eine Maschen- oder eine geschlossene Struktur aufweist.

5. Abstandstextil nach einem der vorhergehenden Ansprüche, wobei die Monofilamente (34, 234, 334) jeweils einen Durchmesser im Bereich von 0,05 mm bis 0,5 mm haben.

6. Abstandstextil nach einem der vorherigen Ansprüche, wobei die Dichte der Monofilamente (34, 234, 334) im Textil im Bereich von 30 bis 200 Filamenten pro cm² (200 bis 1 200 Filamenten/Zoll²) liegen.

7. Abstandstextil nach einem der vorhergehenden Ansprüche, wobei die Filamente (34, 234, 334) die erste gestrickte Stofflage (30, 230, 330) und die zweite gestrickte Stofflage (32, 232, 332) voneinander beabstanden.

8. Abstandstextil nach Anspruch 7, wobei der Abstand zwischen der ersten und der zweiten gestrickte Stofflage (30, 230, 330; 32, 232, 332) im Bereich von 1 mm bis 20 mm liegt.

9. Verfahren zur Herstellung eines Abstandstextils (26, 226, 326), wobei das Verfahren das Stricken einer ersten Stofflage (30, 230, 330), einer zweiten Stofflage (32, 232, 332) und eine Vielzahl von Monofilamenten (34, 234, 334) aus Polyetheretherketon umfasst, die die erste und die zweite Stofflage (30, 230, 330; 32, 232, 332) verbinden.

10. Verfahren nach Anspruch 9, wobei das Stricken Kettenwirken umfasst.

11. Verfahren nach Anspruch 9 oder 10, wobei das Stricken Raschel-Kettenwirken umfasst.

12. Verfahren nach einem der Ansprüche 9 bis 11, wobei die Nadelzahl der Strickmaschine 12 oder mehr beträgt.

13. Verfahren nach Anspruch 12, wobei die Nadelzahl der Strickmaschine 12 bis 22 beträgt.

## Revendications

1. Textile d'espacement (26, 226, 326) comprenant une première couche de tissu, une seconde couche de tissu et une pluralité de filaments comprenant du polyétheréthercétone reliant les première et seconde couches de tissu **caractérisé en ce que** la première couche de tissu est une première couche de tissu tricoté (30, 230, 330), la seconde couche de tissu est une seconde couche de tissu tricoté (32, 232, 332), et la pluralité de filaments comprenant du polyétheréthercétone sont des monofilaments (34, 234, 334) tricotés avec les première et seconde couches de tissu (30, 230, 330 ; 32, 232, 332).

2. Textile d'espacement tel que revendiqué à la revendication 1, dans lequel la première et/ou la seconde couche de tissu tricoté (30, 230, 330 ; 32, 232, 332) comprend du fil d'aramide.

3. Textile d'espacement tel que revendiqué à la revendication 2, dans lequel le fil d'aramide est un fil de méta-aramide.

4. Textile d'espacement tel que revendiqué dans une quelconque des revendications précédentes dans lequel la première et/ou la seconde couche de tissu tricoté (30, 230, 330 ; 32, 232, 332) comprend un maillage ou un tissu à structure fermée.

5. Textile d'espacement tel que revendiqué dans une quelconque des revendications précédentes, dans lequel les monofilaments (34, 234, 334) ont chacun un diamètre de l'ordre de 0,05 mm à 0,5 mm.

6. Textile d'espacement tel que revendiqué dans une quelconque des revendications précédentes dans lequel la densité de monofilaments (34, 234, 334) dans le textile est de l'ordre de 30 à 200 filaments par cm² (200 à 1200 filaments/po²).

7. Textile d'espacement tel que revendiqué dans une quelconque des revendications précédentes dans lequel les filaments (34, 234, 334) espacent la première couche de tissu tricoté (30, 230, 330) de la seconde couche de tissu tricoté (32, 232, 332).

8. Textile d'espacement tel que revendiqué à la revendication 7, dans lequel l'espace entre les première et seconde couches de tissu tricoté (30, 230, 330 ; 32, 232, 332) est de l'ordre de 1 mm à 20 mm.

9. Procédé de production d'un textile d'espacement (26, 226, 326), le procédé consistant à tricoter une première couche de tissu (30, 230, 330), une seconde couche de tissu (32, 232, 332) et une pluralité de monofilaments (34, 234, 334) comprenant du polyétheréthercétone reliant les première et seconde couches de tissu (30, 230, 330 ; 32, 232, 332).

10. Procédé tel que revendiqué à la revendication 9, dans lequel le tricotage comprend du tricotage chaîne.

11. Procédé tel que revendiqué dans une quelconque de la revendication 9 ou revendication 10, dans lequel le tricotage comprend du tricotage chaîne Rachel.

12. Procédé tel que revendiqué dans une quelconque des revendications 9 à 11, dans lequel la jauge de la machine à tricoter est de 12 ou supérieure.

13. Procédé tel que revendiqué à la revendication 12, dans lequel la jauge de la machine à tricoter est de 12 à 22.
